# EUROPEAN PATENT APPLICATION

(11) **EP 4 622 209 A1**
(43) Date of publication of application: **24.09.2025**
(21) Application number: 23893145.5
(22) Date of filing: 29.06.2023
(51) Int. Cl.: H04L 45/02

(54) **ROUTING UPDATING METHOD AND APPARATUS, DEVICE, AND STORAGE MEDIUM**

(30) Priority: 22.11.2022 CN 202211469554
(71) Applicant: Huawei Technologies Co., Ltd., Shenzhen, Guangdong 518129 (CN)
(72) Inventor: DONG, Jiajia, Shenzhen, Guangdong 518129 (CN); HU, Zhibo, Shenzhen, Guangdong 518129 (CN); YANG, Pingan, Shenzhen, Guangdong 518129 (CN); HAN, Tao, Shenzhen, Guangdong 518129 (CN); ZHU, Jianbo, Shenzhen, Guangdong 518129 (CN); CHEN, Chuang, Shenzhen, Guangdong 518129 (CN)
(74) Representative: Körber, Martin Hans
(86) International application number: PCT/CN2023/103692
(87) International publication number: WO 2024/109045

(57) **Abstract**

This application discloses a route update method and apparatus, a device, and a storage medium, and relates to the field of communication technologies. The method is performed by a network device, and includes: obtaining a faulty first link, where the network device includes a first entry, and the first entry includes a first prefix and a path corresponding to the first prefix; updating, based on the first link, the path corresponding to the first prefix; and obtaining, based on an updated path corresponding to the first prefix, forwarding information corresponding to the first prefix. The forwarding information corresponding to the first prefix is updated by using the path that is included in the first entry and that corresponds to the first prefix. In this process, route recalculation does not need to be performed. Therefore, a calculation amount required for route update after a link fault is reduced, and route update efficiency is improved.

## Description

This application claims priority to Chinese Patent Application No. 202211469554.7, filed with the China National Intellectual Property Administration on November 22, 2022 and entitled "ROUTE UPDATE METHOD AND APPARATUS, DEVICE, AND STORAGE MEDIUM", which is incorporated herein by reference in its entirety.

### TECHNICAL FIELD

This application relates to the field of communication technologies, and in particular, to a route update method and apparatus, a device, and a storage medium.

### BACKGROUND

An interior gateway protocol (interior gateway protocol, IGP) is a routing protocol shared in an autonomous system (autonomous system, AS), in which all network devices are connected to each other. In a link-state routing protocol of the IGP, each of the network devices can obtain topology information of an entire network, and performs route calculation based on the topology information of the entire network, to obtain forwarding information corresponding to any prefix in the network, where for example, the forwarding information includes an outbound interface and a next hop.

After a topology structure changes due to a network fault, the obtained forwarding information corresponding to any prefix in the network needs to be updated, that is, route update needs to be performed. In related technologies, each network device performs route recalculation based on a changed topology structure for route update. However, because a process of route recalculation is lengthy, a route update speed is slow.

### SUMMARY

This application provides a route update method and apparatus, a device, and a storage medium, to improve route update efficiency.

According to a first aspect, a route update method is provided. The method includes: A network device obtains a faulty first link, where the network device includes a first entry, and the first entry includes a first prefix and a path corresponding to the first prefix. The network device updates, based on the first link, the path corresponding to the first prefix, and obtains, based on an updated path corresponding to the first prefix, forwarding information corresponding to the first prefix.

In the method, when a link fault occurs in a network, the forwarding information corresponding to the first prefix is updated by using the path that is included in the first entry and that corresponds to the first prefix. In this process, route recalculation does not need to be performed. Therefore, a calculation amount required for route update after a link fault is reduced, and route update efficiency is improved.

In a possible implementation, a manner of updating, by the network device based on the first link, the path corresponding to the first prefix is: updating a status of a first path to an unavailable state, to obtain the updated path corresponding to the first prefix, where the first path is a path including the first link in the path corresponding to the first prefix. In other words, a state of a path that is in the path corresponding to the first prefix and that does not include the first link is an available state. In this way, path update is implemented, and an available path after a link fault can be obtained by refreshing a path status, without performing route calculation. The updated path corresponding to the first prefix includes at least one path in the available state.

In a possible implementation, when the updated path corresponding to the first prefix includes a path in the available state, the forwarding information corresponding to the first prefix is directly obtained based on routing information corresponding to the path in the available state. When the updated path corresponding to the first prefix includes a plurality of paths that are in the available state, a target path is selected from the plurality of paths based on routing information respectively corresponding to the plurality of paths, to obtain, based on routing information corresponding to the target path, the forwarding information corresponding to the first prefix, where the routing information includes at least one of a cost, an outbound interface, and a next hop. Optionally, the target path includes but is not limited to a path that is in the plurality of paths and whose cost meets a cost requirement and whose outbound interface and next hop have a payload meeting a payload requirement.

In this way, the forwarding information corresponding to the first prefix is obtained based on the updated path corresponding to the first prefix, and the obtained forwarding information corresponding to the first prefix is more accurate and meets a routing requirement by selecting the target path. This further ensures route update performance.

In a possible implementation, the routing information further includes a segment identifier (segment identifier, SID), and a SID corresponding to a second path in the plurality of paths indicates to forward a packet along the second path. The forwarding information corresponding to the first prefix includes a SID corresponding to the target path. The SID corresponding to the target path is used as the forwarding information corresponding to the first prefix. In this way, a case in which information is forwarded in a closed-loop manner because completion time of route update of different network devices is different can be avoided.

In a possible implementation, a manner of obtaining, based on the routing information corresponding to the target path, the forwarding information corresponding to the first prefix may be: before convergence duration reaches a duration threshold, using the SID corresponding to the target path as the forwarding information corresponding to the first prefix, where the convergence duration is duration from time at which the network device starts to perform route update to current time; and after the convergence duration reaches the duration threshold, using the outbound interface and the next hop corresponding to the target path as the forwarding information corresponding to the first prefix.

In a possible implementation, the network device includes a control apparatus and a forwarding apparatus, and the first entry is stored in the forwarding apparatus. A manner of updating, by the network device based on the first link, the path corresponding to the first prefix is: sending, by using the control apparatus, an identifier of the first link to the forwarding apparatus; and updating, by using the forwarding apparatus based on the identifier of the first link, the path corresponding to the first prefix. In the route update process, the control apparatus needs to deliver only the identifier of the faulty link to the forwarding apparatus, and does not need to deliver recalculated routing information. Therefore, a data amount and time for interaction between the control apparatus and the forwarding apparatus are reduced.

In a possible implementation, there are a plurality of first prefixes, the plurality of first prefixes are associated with corresponding paths and forwarding information by using a plurality of indirect indexes, and a quantity of the plurality of first prefixes is greater than a quantity of the plurality of indirect indexes, the network device may directly update, based on the first link, the paths respectively corresponding to the plurality of indirect indexes; obtain, based on paths respectively corresponding to a plurality of updated indirect indexes, forwarding information respectively corresponding to the plurality of indirect indexes; and obtain, based on a correspondence between the plurality of indirect indexes and the plurality of first prefixes, the forwarding information respectively corresponding to the plurality of first prefixes.

Therefore, one indirect index corresponds to one update process. Because the quantity of indirect indexes is less than the quantity of first prefixes, in comparison with a case in which one first prefix corresponds to one update process, an update speed of route update is increased, update efficiency of route update is improved, and route update performance is improved.

In a possible implementation, before obtaining the faulty first link, the network device first performs route calculation based on a topology structure before the fault of the first link, to obtain the at least one path from the network device to the destination device corresponding to the first prefix, uses the at least one path as the path corresponding to the first prefix, and generates the first entry. The route update method can be implemented by calculating the path corresponding to the first prefix in advance.

In a possible implementation, when there are a plurality of destination devices corresponding to the first prefix, a manner of obtaining the at least one path from the network device to the destination device corresponding to the first prefix may be: obtaining the at least one path from the network device to the first virtual device, where the first virtual device is connected to the plurality of destination devices corresponding to the first prefix; and obtain, based on the at least one path from the network device to the first virtual device, the at least one path from the network device to the destination device corresponding to the first prefix. Therefore, through setting of the virtual device, the route update method can be used for route update in a scenario in which the plurality of destination devices advertise the same prefix. This improves applicability of the method.

According to a second aspect, a route update apparatus is provided. The apparatus includes:
a first obtaining module, configured to obtain a faulty first link, where the network device includes a first entry, and the first entry includes a first prefix and a path corresponding to the first prefix;
an update module, configured to update, based on the first link, the path corresponding to the first prefix; and
a second obtaining module, configured to obtain, based on an updated path corresponding to the first prefix, forwarding information corresponding to the first prefix.

In a possible implementation, the update module is configured to update a status of a first path to an unavailable state, where the first path is a path including the first link in the path corresponding to the first prefix.

In a possible implementation, the updated path corresponding to the first prefix includes a plurality of paths in an available state. The second obtaining module is configured to: select a target path from the plurality of paths based on routing information respectively corresponding to the plurality of paths, where the routing information includes at least one of a cost, an outbound interface, and a next hop; and obtain, based on routing information corresponding to the target path, the forwarding information corresponding to the first prefix.

In a possible implementation, the routing information further includes a SID, and a SID corresponding to a second path in the plurality of paths indicates to forward a packet along the second path. The forwarding information corresponding to the first prefix includes a SID corresponding to the target path.

In a possible implementation, the network device includes a control apparatus and a forwarding apparatus, and the first entry is stored in the forwarding apparatus. The update module is configured to: send, by using the control apparatus, an identifier of the first link to the forwarding apparatus; and update, by using the forwarding apparatus based on the identifier of the first link, the path corresponding to the first prefix.

In a possible implementation, there are a plurality of first prefixes, the plurality of first prefixes are associated with corresponding paths and forwarding information by using a plurality of indirect indexes, and a quantity of the plurality of first prefixes is greater than a quantity of the plurality of indirect indexes. The update module is configured to update, based on the first link, paths respectively corresponding to the plurality of indirect indexes. The second obtaining module, configured to obtain, based on paths respectively corresponding to a plurality of updated indirect indexes, forwarding information respectively corresponding to the plurality of indirect indexes; and obtain, based on a correspondence between the plurality of indirect indexes and the plurality of first prefixes, the forwarding information respectively corresponding to the plurality of first prefixes.

In a possible implementation, the apparatus further includes: a route calculation module, configured to perform route calculation based on a topology structure that is before a fault of the first link, to obtain at least one path from the network device to a destination device corresponding to the first prefix; and
a generation module, configured to: use the at least one path as the path corresponding to the first prefix, and generate the first entry.

In a possible implementation, when there are a plurality of destination devices corresponding to the first prefix, the route calculation module is configured to: obtain at least one path from the network device to a first virtual device, where the first virtual device is connected to the plurality of destination devices corresponding to the first prefix; and obtain, based on the at least one path from the network device to the first virtual device, at least one path from the network device to the destination device corresponding to the first prefix.

According to a third aspect, a network device is provided. The network device includes a processor, the processor is coupled to a memory, the memory stores at least one program instruction or code, and the at least one program instruction or the code is loaded and executed by the processor, to enable the network device to implement the route update method according to the first aspect.

Optionally, there are one or more processors, and there are one or more memories.

Optionally, the memory may be integrated with the processor, or the memory and the processor are separately disposed.

In a specific implementation process, the memory may be a non-transitory (non-transitory) memory, for example, a read-only memory (read-only memory, ROM). The memory and the processor may be integrated on a same chip, or may be separately disposed on different chips. A type of the memory and a manner of disposing the memory and the processor are not limited in this application.

According to a fourth aspect, a communication apparatus is provided. The apparatus includes a transceiver, a memory, and a processor. The transceiver, the memory, and the processor communicate with each other through an internal connection path. The memory is configured to store instructions. The processor is configured to execute the instructions stored in the memory, to control the transceiver to receive a signal, and control the transceiver to send a signal. In addition, when the processor executes the instructions stored in the memory, the communication apparatus is enabled to perform the method according to the first aspect or any one of the possible implementations of the first aspect.

According to a fifth aspect, a computer-readable storage medium is provided. The storage medium stores at least one instruction, and the instruction is loaded and executed by a processor, so that a computer implements the method according to the first aspect or any one of the possible implementations of the first aspect.

According to a sixth aspect, a computer program (product) is provided. The computer program (product) includes computer program code, and when the computer program code is run by a computer, the computer is enabled to perform the methods in the foregoing aspects.

According to a seventh aspect, a chip is provided, including a processor. The processor is configured to call, from a memory, instructions stored in the memory and run the instructions, to cause a communication device on which the chip is installed to perform the methods according to the foregoing aspects.

According to an eighth aspect, another chip is provided, including an input interface, an output interface, a processor, and a memory. The input interface, the output interface, the processor, and the memory are connected to each other through an internal connection path. The processor is configured to execute code in the memory. When the code is executed, the processor is configured to perform the methods according to the foregoing aspects.

It should be understood that, for beneficial effect achieved by the technical solutions in the second aspect to the eighth aspect and the corresponding possible implementations in this application, refer to the foregoing technical effect in the first aspect and the corresponding possible implementations. Details are not described herein again.

### BRIEF DESCRIPTION OF DRAWINGS

FIG. 1 is a diagram of networking of a network system according to an embodiment of this application;
FIG. 2 is a diagram of a structure of a network device according to an embodiment of this application;
FIG. 3 is a diagram of a structure of another network device according to an embodiment of this application;
FIG. 4 is a diagram of a structure of still another network device according to an embodiment of this application;
FIG. 5 is a flowchart of a route update method according to an embodiment of this application;
FIG. 6 is a schematic of a topology structure of a network device according to an embodiment of this application;
FIG. 7 is a schematic of another topology structure of a network device according to an embodiment of this application;
FIG. 8 is a diagram of a network device and entry information according to an embodiment of this application;
FIG. 9 is a diagram of a link fault according to an embodiment of this application;
FIG. 10 is a diagram of delivering a link identifier according to an embodiment of this application;
FIG. 11 is a diagram of a route update process according to an embodiment of this application;
FIG. 12 is a diagram of advertising a prefix according to an embodiment of this application;
FIG. 13 is a schematic of a topology structure in a multi-source scenario according to an embodiment of this application;
FIG. 14 is a diagram of a path in a multi-source scenario according to an embodiment of this application;
FIG. 15 is a diagram of a microloop scenario according to an embodiment of this application;
FIG. 16 is a diagram of another microloop scenario according to an embodiment of this application;
FIG. 17 is a diagram of a route update process in a microloop avoidance scenario according to an embodiment of this application;
FIG. 18 is a diagram of packet forwarding according to an embodiment of this application;
FIG. 19 is a diagram of a structure of a route update apparatus according to an embodiment of this application;
FIG. 20 is a diagram of a structure of a network device according to an embodiment of this application; and
FIG. 21 is a diagram of a structure of another network device according to an embodiment of this application.

### DESCRIPTION OF EMBODIMENTS

To make the objectives, technical solutions, and advantages of this application clearer, the following further describes the implementations of this application in detail with reference to the accompanying drawings.

Development of communication technologies poses increasingly high requirements on route update performance of an IGP. In embodiments of this application, IGP link state protocols include but are not limited to an open shortest path first (open shortest path first, OSPF) protocol, an intermediate system to intermediate system (intermediate system to intermediate system, IS-IS) protocol, or the like. Because principles of the OSPF protocol and the IS-IS protocol are similar, the OSPF protocol and the IS-IS protocol are not distinguished in embodiments of this application.

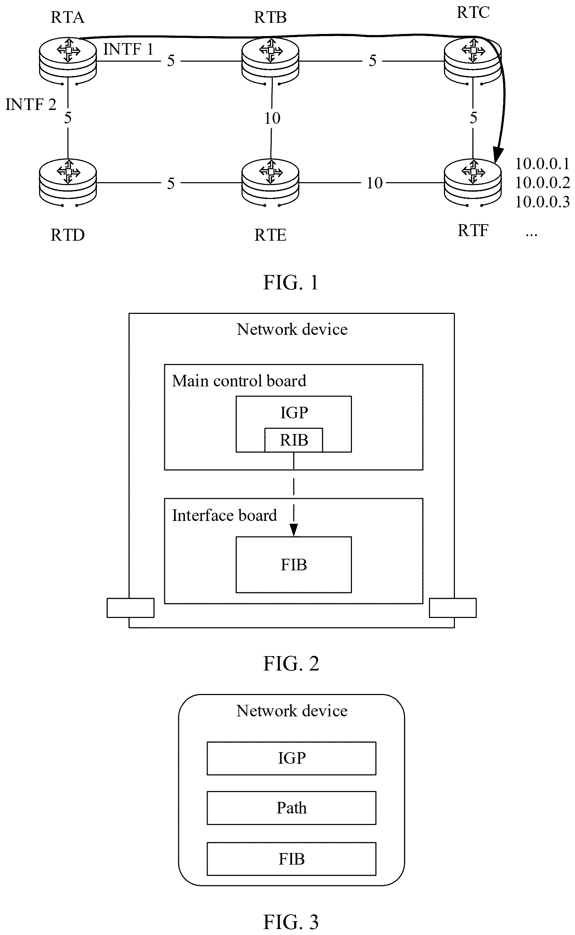

For example, FIG. 1 is a diagram of networking of a network system according to an embodiment of this application. The network system includes a plurality of network devices, and the plurality of network devices run a same IGP link state protocol. For example, the plurality of network devices shown in FIG. 1 include a router A (router A, RTA), a router B (router B, RTB), a router C (router C, RTC), a router D (router D, RTD), a router E (router E, RTE), and a router F (router F, RTF).

The network devices may establish and maintain a neighbor relationship by sending a hello (hello) packet. Each of the network devices obtains all link state packets in the entire network by actively generating a link state packet and receiving link state packets flooded by other network devices in the network. For example, a link state packet generated by the RTF includes a device identity (identity, ID) of the RTF and device IDs of two neighbors: the RTE and the RTC, and the device ID is used to uniquely identify a network device in the network system.

The network devices generate and maintain a same link state database (link state database, LSDB) based on all the link state packets in the entire network. Each of the network devices calculates, by using the maintained LSDB, a path corresponding to each possible destination device in the network by using a shortest path first (shortest path first, SPF) algorithm or a shortest path tree (shortest path tree, SPT) algorithm, and obtains, based on a prefix (prefix) advertised by each destination device, forwarding information corresponding to a plurality of prefixes. The forwarding information includes but is not limited to an outbound interface and a next hop, and the forwarding information may be represented by using a routing table (routing info base, RIB).

The RTA is used as an example. As shown in FIG. 1, a shortest path from the RTA to the RTF calculated by using the SPF is RTA-RTB-RTC-RTF. In FIG. 1, a cost (cost) corresponding to a link RTA-RTB is 5. In this case, a cost corresponding to the shortest path RTA-RTB-RTC-RTF is 5+5+5=15, and the cost corresponding to the shortest path is smallest in costs corresponding to all paths from RTA to RTF. Herein, the cost is a metric of routing. It is determined, based on the shortest path, that a next hop from the RTA to the RTF is the RTB, and an outbound interface is an interface (interface, INTF) 1 connected to the RTB. For prefixes advertised on the RTF, for example, 10.0.0.1, 10.0.0.2, and 10.0.0.3, a RIB table shown in Table 1 may be generated.

**Table 1**

| Prefix | Outbound interface | Next hop |
|---|---|---|
| 10.0.0.1 | INTF 1 | RIB |
| 10.0.0.2 | INTF 1 | RIB |
| 10.0.0.3 | INTF 1 | RIB |

When a topology structure of the network changes, for example, an interface or a link state changes, an adjacency relationship changes, or the network device is faulty, these changes are first discovered by a neighboring network device. The neighboring network device generates a link state packet and sends the link state packet, and all other network devices can obtain the link state packet in a flooding process. Further, when receiving the link state packet, each network device updates the LSDB and triggers update of the RIB.

In embodiments of this application, in addition to one RIB, each network device further generates and maintains a forwarding table (forwarding info base, FIB). The RIB includes routing information and link information in the entire network. An active routing entry in the RIB may be downloaded to the FIB, and a routing entry includes a prefix and forwarding information such as an outbound interface and a next hop corresponding to the prefix. Then, packet forwarding is performed based on the FIB. Because routing entries included in the FIB are less than those included in the RIB, packet forwarding based on the FIB can improve packet forwarding efficiency. When the network device receives a packet, the network device obtains a destination address of the packet through parsing, and searches the FIB for a corresponding routing entry based on the destination address, for example, matching the destination address with the prefix in the FIB, determining the matched prefix according to a longest mask matching rule, and forwarding the packet through the outbound interface corresponding to the prefix.

Therefore, after the routing table is updated, the forwarding table needs to be correspondingly updated based on updated routing table. This process may be referred to as table refreshing. For example, refer to a diagram of a structure of the network device shown in FIG. 2. The network device includes a main control board and an interface board. An IGP module in the main control board is configured to obtain the RIB through calculation, and the main control board delivers the FIB generated based on the RIB to the interface board, so that the interface board forwards, after receiving the packet, the packet based on the FIB. After all the network devices complete update of the forwarding table, route convergence of the entire network after the change of the topology structure of the network is completed.

In conclusion, convergence time required for route convergence of the IGP network may be expressed as D+O+h*F+SPT+RIB+DD. Herein, D is time for detecting the change of the topology structure. When the change of the topology structure is caused by a link fault, D is time for detecting the link fault. O is time for generating a new link state packet, h is a quantity of hops from the network device that discovers the change of the topology structure to a farthest network device, F is time for flooding the link state packet once, h*F is time for flooding to the farthest network device, SPT is time for recalculating the route by using the shortest path tree algorithm, RIB is time for updating the routing table on the main control board by the network device, and DD is time for performing table refreshing on the FIB based on an updated RIB.

According to the foregoing formula, performance in the foregoing steps may be improved to reduce convergence time of route convergence to improve route convergence performance. In related technologies, convergence performance is improved through incremental SPT calculation and link state packet quick flooding. Based on this, embodiments of this application provide a route update method to improve performance in a step of recalculating the route and a step of performing table refreshing on the FIB based on the updated RIB, to accelerate a route update speed, so as to improve a route convergence speed and performance.

Next, the route update method provided in embodiments of this application is used as an example for description. An application scenario of the route update method is not limited in embodiments of this application. For example, the route update method may be applied a scenario like an operator metropolitan area network, a backbone network, large-scale IGP networking, or multi-neighbor networking, or may be applied to another scenario in which route update is performed based on a link state protocol.

An implementation environment of the route update method provided in embodiments of this application may include a plurality of network devices. For example, the implementation environment may be the network system shown in FIG. 1, and another network device may be further deployed in the network system shown in FIG. 1. Any network device may be a layer-3 switch (the layer-3 switch is a switch having a routing information exchange function) or a router.

For example, a structure of any network device shown in FIG. 1 may be shown in FIG. 3. The network device may include an IGP module, a path module, and a FIB module. The IGP module is configured to run an IGP control plane protocol, and is mainly responsible for protocol packet exchange, LSDB maintenance, and routing table calculation and delivery. The path module is a newly added module in embodiments of this application, and is responsible for storing a first entry, maintaining a status of the first entry, and updating, based on an updated path, a FIB for actual packet forwarding. The FIB module includes a forwarding hardware table converted from a RIB, namely, a FIB used for actual packet forwarding.

In embodiments of this application, deployment locations of the IGP module, the path module, and the FIB module in the network device are not limited, and are related to an actual physical implementation of the network device. Optionally, the network device includes a control apparatus and a forwarding apparatus. In this case, the IGP module may be deployed in the control apparatus, the path module may be deployed in the control apparatus or the forwarding apparatus, and the FIB module may be deployed in the forwarding apparatus. The control apparatus may be deployed on a main control board, and the forwarding apparatus may be deployed on a card, an interface board, or a forwarding line card board, or the control apparatus and the forwarding apparatus are deployed on a same board. This is not limited in embodiments of this application.

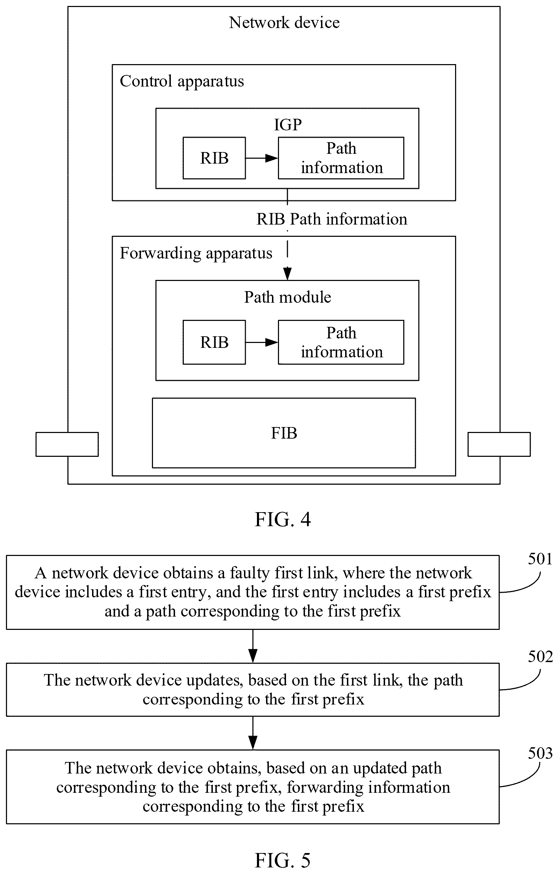

For example, refer to the network device shown in FIG. 4. The IGP module is deployed in the control apparatus, the IGP module generates the RIB and path information, the IGP module delivers the RIB and the path information to the path module in the forwarding apparatus, and the path module generates the FIB based on the RIB and the path information, so that the forwarding apparatus implements packet forwarding based on the FIB.

Network devices are communicatively connected in a wired network or wireless network manner. In some embodiments, the foregoing wireless network or wired network uses a standard communication technology and/or protocol. A network is usually the Internet, but may alternatively be any network, including but not limited to any combination of a local area network (local area network, LAN), a metropolitan area network (metropolitan area network, MAN), a wide area network (wide area network, WAN), a mobile network, a wired or wireless network, a private network, or a virtual private network. In some embodiments, peer-to-peer (peer-to-peer, P2P) communication is implemented between the plurality of network devices based on a remote procedure call protocol (remote procedure call protocol, RPC).

In some embodiments, technologies and/or formats including a hypertext markup language (hypertext markup language, HTML), an extensible markup language (extensible markup language, XML), and the like are used to represent data exchanged through the network. In addition, common encryption technologies such as a secure socket layer (secure socket layer, SSL), transport layer security (transport layer security, TLS), a virtual private network (virtual private network, VPN), and internet protocol security (internet protocol security, IPsec) can be used to encrypt all or some channels. In some other embodiments, customized and/or dedicated data communication technologies can also be used to replace or supplement the foregoing data communication technologies.

An embodiment of this application provides a route update method. The method may be applied to the network system shown in FIG. 1. For example, the method is performed by the network device in the foregoing network system. As shown in FIG. 5, the method includes but is not limited to step 501 to step 503.

Step 501: The network device obtains a faulty first link, where the network device includes a first entry, and the first entry includes a first prefix and a path corresponding to the first prefix.

In embodiments of this application, the network device that performs the route update method may be any network device in a topology structure of a network. When the topology structure of the network changes due to fault of the network device, the network device that performs the route update method is any network device in the topology structure of the network other than the faulty device.

The prefix includes a network address and a prefix length (or a network mask), one prefix represents one routing entry, and a combination of the network address and the network mask can identify one destination address. Generally, a prefix is associated with a corresponding outbound interface and next hop, and is used for forwarding, based on the corresponding outbound interface and next hop, a packet whose destination address matches the prefix. In embodiments of this application, the path corresponding to the first prefix may include at least one optional path to the destination address indicated by the first prefix. Optionally, when there are a plurality of paths corresponding to the first prefix, the plurality of paths are fault-orthogonal. Fault-orthogonal means that a case in which all of the plurality of paths are unavailable due to failure/failures a single network device/a plurality of network devices, or a single link/a plurality of links does not exist.

In a possible implementation, before step 501, the network device needs to first generate the first entry, and further, the network device needs to first obtain the plurality of paths corresponding to the first prefix. Optionally, a manner in which the network device obtains the path corresponding to the first prefix may be: The network device performs route calculation based on a topology structure before a fault of the first link, to obtain at least one path from the network device to a destination device corresponding to the first prefix; and the network device uses the at least one path as the path corresponding to the first prefix. In this way, the network device can obtain a path corresponding to any prefix, and can generate the first entry. For example, the first entry may be the RIB.

A used route calculation method is not limited in embodiments of this application. For example, a widely used K-link shortest path (K-link Shortest Path, K-SP) algorithm may be used. The K-SP algorithm is used to calculate K (K is a positive integer) shortest paths from a source device to a destination device for any pair of a source device and a destination device in a network topology, where the K shortest paths are respectively a shortest path, a second shortest path, a third shortest path, and the like. Therefore, the K shortest paths may be referred to as top (Top) K paths. In addition, the K-SP algorithm can ensure that the top K paths are fault-orthogonal.

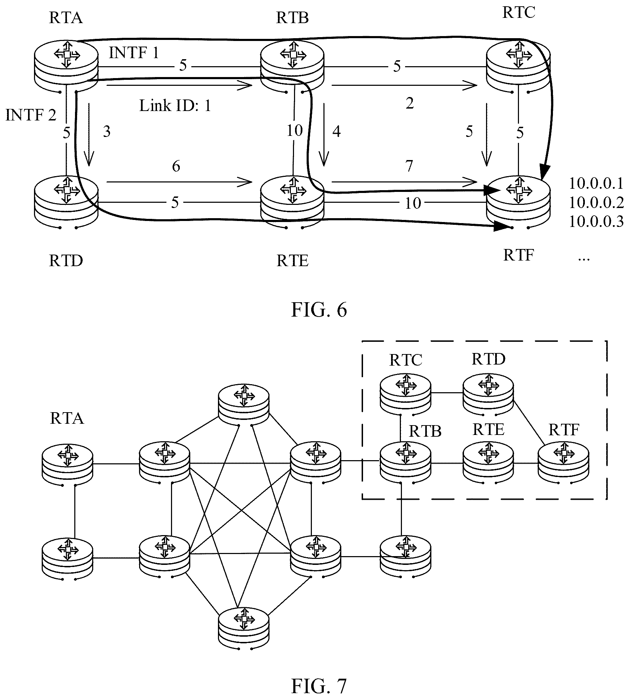

For example, the path corresponding to the first prefix is a top K path. The top K path includes a plurality of links. Therefore, the IGP may apply for and associate an ID for each link. A manner of identifying the link is not limited in embodiments of this application, provided that different links can be distinguished. For example, in a topology structure shown in FIG. 6, a correspondence between a link and an ID may be: RTA → RTB corresponds to 1, RTB → RTC corresponds to 2, RTA → RTD corresponds to 3, RTB → RTE corresponds to 4, RTC → RTF corresponds to 5, RTD → RTE corresponds to 6, and RTE → RTF corresponds to 7, where RTA → RTB indicates a link between the RTA and the RTB.

As shown in FIG. 6, when a source device is the RTA, a destination device is the RTF, and K is 3, the RTA can obtain, through calculation, three paths to the RTF, and routing information such as an outbound interface, a next hop, or a cost associated with each path. For example, a path 1 includes a link 1, a link 2, and a link 5, a forwarding cost corresponding to the path 1 is 5+5+5=15, an outbound interface corresponding to the path 1 is an INTF 1, and a next hop corresponding to the path 1 is the RTB. A path 2 includes the link 1, a link 4, and a link 7, a forwarding cost corresponding to the path 2 is 5+10+10=25, an outbound interface corresponding to the path 2 is the INTF 1, and a next hop corresponding to the path 2 is the RTB. A path 3 includes a link 3, a link 6, and the link 7, a forwarding cost corresponding to the path 3 is 5+5+10=20, an outbound interface corresponding to the path 3 is an INTF 2, and a next hop corresponding to the path 1 is the RTD.

In a possible implementation, each path in the top K paths may be identified by using an identifier of a link that the path passes through. For example, an identifier of the path 1 shown in FIG. 6 may be 1, 2, or 5. Therefore, complete information that is of top K paths corresponding to the RTF and that is included in the RTA may be: path 1:1, 2, 5/NHP_B/cost:15; path 2:1, 4, 7/NHP_B/cost:25; and path 3:3, 6, 7/NHP_ D/cost:20. On the RTA, an outbound interface corresponding to NHP_B is the INTF 1 and the next hop is the RTB, and an outbound interface corresponding to NHP_D is the INTF 2 and the next hop is the RTD.

Therefore, in the foregoing manner, the network device can obtain a plurality of paths from the network device to any destination device, and a destination address corresponding to each first prefix can correspond to one destination device. In this way, the plurality of paths corresponding to the first prefix are obtained. The plurality of obtained paths corresponding to the first prefix are stored in the first entry for use in a subsequent route update process, so that route calculation does not need to be performed again during route update to obtain a new path used to replace an original path.

Optionally, the first entry may include a plurality of first prefixes, and the plurality of first prefixes may be associated with corresponding paths by using a plurality of indirect indexes (indirect indexes, IIDs). Therefore, when a same network device advertises a plurality of first prefixes, at least two first prefixes may be associated with a corresponding same group of paths by using indirect indexes. The IID is used to indirectly associate entries. In embodiments of this application, the IID indirectly associates a prefix with a path.

The top K paths are still used as an example. In embodiments of this application, the top K paths are calculated based on a granularity of the destination device, to be specific, each destination device corresponds to a group of top K paths. If a same destination device advertises a plurality of prefixes, the plurality of prefixes may be associated with corresponding top K paths by using indirect indexes. In a possible implementation, the network device allocates one IID to each remote destination device. For example, an IID allocated to the RTF is 1. All prefixes advertised by the RTF are associated with an IID:1, and then the IID:1 is associated with top K paths to the RTF. Indirect association between a plurality of prefixes and a group of top K paths is implemented.

Optionally, in addition to a manner in which the network device allocates one IID to each remote destination device, the network device may further allocate one IID to a plurality of remote destination devices. The plurality of remote destination devices have a feature of being capable of sharing routing information. For example, refer to a topology structure shown in FIG. 7. It is assumed that a network in a dashed box is stable, that is, a link in the dashed box is not faulty. For each network device in the dashed box, convergence behaviors of route update caused by link faults outside the dashed box are the same. For example, it may be considered that forwarding information corresponding to the RTC, the RTD, the RTE, and the RTF after convergence is consistent with forwarding information corresponding to the RTB after convergence. In this case, a same IID may be allocated to the RTB to the RTF, and a path associated with the IID may be calculated based on any destination device in the RTB to the RTF. Therefore, all network devices in the dashed box inherit the forwarding information corresponding to the same IID.

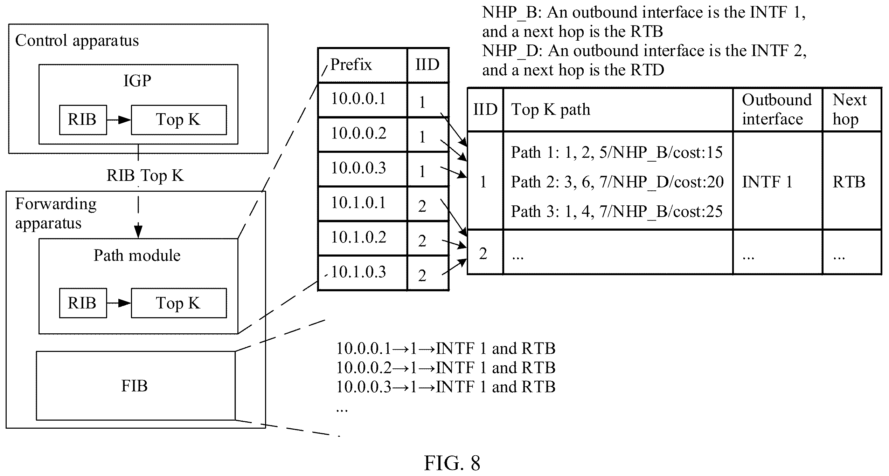

For example, refer to entry information included in a path module shown in FIG. 8. A prefix 10.0.0.1 is associated with one IID: 1, which is used to index an outbound interface and a next hop. It can be seen that the IID: 1 is also associated with top K paths, namely, top K paths to the RTF. Similarly, a prefix 10.0.0.2 and a prefix 10.0.0.3 are also associated with the IID: 1, and are also indirectly associated with the Top K paths to the RTF. In this way, all prefixes advertised on the RTF are associated with the top K paths to the RTF by using IID:1, and the RTA may determine, based on routing information respectively corresponding to the top K paths, forwarding information corresponding to all the prefixes advertised on the RTF.

Optionally, a determining manner in which the RTA determines, based on the routing information respectively corresponding to the top K paths, the forwarding information corresponding to all the prefixes advertised on the RTF may be: selecting, from the top K paths, a target path whose cost meets a cost requirement and whose outbound interface and next hop have a payload that meets a payload requirement, and determining, based on routing information corresponding to the target path, the forwarding information corresponding to all the prefixes advertised on the RTF. For example, if the cost requirement and the payload requirement are minimum, the determining manner is selecting an outbound interface and a next hop corresponding to a path with a minimum cost. If costs of a plurality of paths are the same, payload sharing is performed on a plurality of outbound interfaces and next hops, and a path with a minimum current payload is selected. It is determined, by using IID: 1 in FIG. 8, that an outbound interface and a next hop are NHP_B.

In this embodiment of this application, a structure of a FIB entry used for actual forwarding is usually similar to a structure of the foregoing RIB. Optionally, each forwarding entry includes: prefix → index (index) → outbound interface and a next hop. For example, refer to FIB entry information included in a FIB module shown in FIG. 8. 10.0.0.1 → 1 → INTF 1 and RTB is used as an example. After receiving a packet, the RTA finds, based on a destination address included in the packet, matched 10.0.0.1 in a FIB according to a longest mask matching algorithm, performs searching again based on the index: 1 associated with 10.0.0.1, determines that the outbound interface and the next hop are the INTF 1 and the RTB, and then forwards the packet according to the INTF 1 and the RTB.

Optionally, the index in the FIB is a concept similar to the foregoing IID, and may be derived based on the IID, or may be the same as the IID. This is not limited in embodiments of this application. For example, the index is the same as the IID. The prefix corresponds to the IID, and the IID corresponds to the outbound interface and the next hop. Therefore, when a large quantity of prefixes correspond to a same IID, the IID corresponding to the prefixes does not need to be updated, and an outbound interface and a next hop corresponding to the IID may be updated separately (a quantity of times of table flushing is a quantity of IIDs), and outbound interfaces and next hops corresponding to the prefixes do not need to be updated in sequence (the quantity of times of table flushing is the quantity of prefixes). Therefore, a quantity of times of table flushing by the RIB to the FIB is reduced, and table flushing efficiency is improved, that is, route update efficiency is improved.

In conclusion, based on FIG. 8, a software table (also referred to as a RIB) is maintained in the forwarding apparatus by using the path module, and an association relationship of the software table is: prefix → IID → Top K paths → outbound interface and next hop. A hardware table (also referred to as a FIB) is maintained in the forwarding apparatus by using the FIB module, and an association relationship of the hardware table is: prefix → index → outbound interface and next hop. Compared with the software table, the hardware table does not have the Top K paths. Therefore, the hardware table may be obtained by separately obtaining the prefix → IID → outbound interface and next hop in the software table. The hardware table may be understood as being obtained by processing the software table, and the Top K paths in the software table is used to determine the outbound interface and the next hop of the prefix. The first entry in embodiments of this application may be a RIB, or may be a RIB and a FIB.

Therefore, before the topology structure of the network changes, routing information including an entire network topology and forwarding information used for packet forwarding are obtained in the foregoing process. When a fault occurs in the network and causes a change in the topology structure of the network, the network devices in the topology structure notify each other of the faulty first link, so that the network devices can obtain the faulty first link. It may be understood that, when the network device in the network is faulty, the faulty first link is all links connected to the faulty device.

In embodiments of this application, fault types are mainly classified into a local link fault and a remote link fault. The local link fault is mainly sensed based on a local interface state. When a local interface senses the local link fault, an IGP is triggered to update an LSDB link state, to trigger execution of a route update process. In addition, a network device that senses the link fault notifies another network device of a change of link state information. The remote link fault is mainly sensed based on a change of the notified link state information.

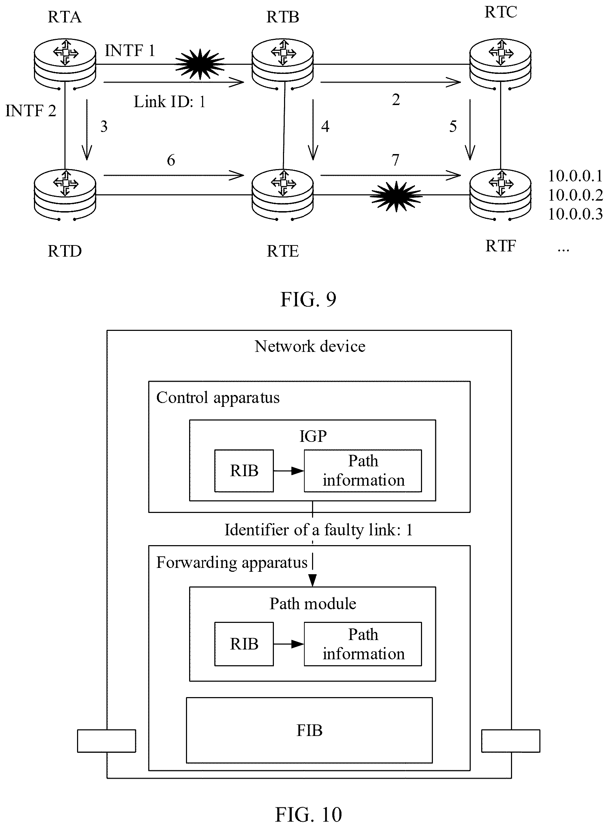

For example, refer to a diagram of a link fault shown in FIG. 9. For the RTA, a fault of the link 1 is a local link fault, and a fault of the link 7 is a remote link fault. For the RTE and the RTF, the fault of the link 7 is a local link fault, and the fault of the link 1 is a remote link fault. For example, when the link 7 is faulty, both the RTE and the RTF can sense the fault of the local link 7 through the local interface, and both the RTE and the RTF re-advertise link state information, where the link state information indicates that a changed network topology no longer includes the link between the RTE and the RTF.

In this embodiment of this application, for example, the network device is the RTA. Regardless of whether the RTA senses the local link fault through the local interface or obtains the remote link fault based on the notified link state information, the RTA can identify a faulty link, and can obtain a link identifier associated with the faulty link. Therefore, after the link identifier associated with the faulty link is determined, routing information and forwarding information obtained before a change may be updated based on the link identifier of the faulty link.

Step 502: The network device updates, based on the first link, the path corresponding to the first prefix.

Because the first entry of the network device includes the path corresponding to the first prefix, after it is learned that the faulty link is the first link, the path corresponding to the first prefix may be directly updated based on the first link. For example, each path in the paths corresponding to the first prefix may be updated, or a path that is in the paths corresponding to the first prefix and that includes the first link may be updated, to obtain an available path corresponding to the first prefix after the topology structure of the network changes.

In a possible implementation, a manner of updating the path corresponding to the first prefix by the network device based on the first link is: updating a status of the path that is in the paths corresponding to the first prefix and that includes the first link to an unavailable state, to obtain an updated path corresponding to the first prefix. In other words, a state of a path that is in the path corresponding to the first prefix and that does not include the first link is an available state. The updated path corresponding to the first prefix includes at least one path in the available state.

In this embodiment of this application, if there are a plurality of first prefixes, the plurality of first prefixes are associated with corresponding paths and forwarding information by using a plurality of indirect indexes, and a quantity of the plurality of first prefixes is greater than a quantity of the plurality of indirect indexes, the network device may directly update, based on the first link, the paths respectively corresponding to the plurality of indirect indexes; obtain, based on paths respectively corresponding to a plurality of updated indirect indexes, forwarding information respectively corresponding to the plurality of indirect indexes; and obtain, based on a correspondence between the plurality of indirect indexes and the plurality of first prefixes, the forwarding information respectively corresponding to the plurality of first prefixes. Therefore, one indirect index corresponds to one update process. Because the quantity of indirect indexes is less than the quantity of first prefixes, in comparison with a case in which one first prefix corresponds to one update process, an update speed of route update is increased, and update efficiency of route update is improved.

In addition, if the network device includes a control apparatus and a forwarding apparatus, and the first entry is stored in the forwarding apparatus, in step 502, the control apparatus sends an identifier of the first link to the forwarding apparatus, to update, based on the identifier of the first link by using the forwarding apparatus, the path corresponding to the first prefix. For example, as shown in FIG. 10, after the RTA identifies the link identifier of the faulty link by using the control apparatus, the RTA delivers the identifier of the faulty link to a path module of the forwarding apparatus by using the control apparatus. For example, the link 1 is faulty. The RTA delivers an identifier 1 to the path module of the forwarding apparatus by using the control apparatus. After obtaining the identifier of the faulty link, the network device updates, based on the identifier of the faulty link, a state of a path corresponding to each prefix in the first entry.

Optionally, for each path in the paths corresponding to the first prefix, whether each path includes the faulty link is determined, and then a status of the path including the faulty link is set to the unavailable state. When an identifier of the path is formed by an identifier of a link that the path passes through, a state of a path whose path identifier includes the identifier of the faulty link may be set to the unavailable state.

Step 503: The network device obtains, based on an updated path corresponding to the first prefix, forwarding information corresponding to the first prefix.

In this embodiment of this application, because the updated path corresponding to the first prefix includes at least one path in the available state, updated forwarding information corresponding to the first prefix may be obtained based on the at least one path in the available state. When there is one at least one path in the available state, the forwarding information corresponding to the first prefix may be directly obtained based on routing information of the path in the available state. For example, an outbound interface and a next hop of the path in the available state are used as the outbound interface and the next hop corresponding to the first prefix.

With reference to the related content of the path corresponding to the first prefix obtained by the network device in step 501, the routing information separately corresponding to the path corresponding to the first prefix may include at least any one of information such as a cost, an outbound interface, and a next hop. When the at least one path in the available state includes a plurality of paths, a target path may be selected from the plurality of paths based on routing information respectively corresponding to the plurality of paths that are in the available state, and forwarding information corresponding to the first prefix is obtained based on routing information corresponding to the target path. For example, an outbound interface and a next hop corresponding to the target path are used as the outbound interface and the next hop corresponding to the first prefix. Optionally, the target path is a path that is in the plurality of paths and whose cost meets the cost requirement and whose outbound interface and next hop have a payload meeting the payload requirement.

In a possible implementation, the routing information corresponding to the path further includes a SID, and a SID corresponding to a second path in the plurality of paths indicates to forward the packet in the second path. In this case, the forwarding information corresponding to the first prefix includes a SID corresponding to the target path. For example, the SID corresponding to the second path indicates to forward the packet in the second path, and the second path may be any one of the plurality of paths. A manner of obtaining, based on the routing information corresponding to the target path, the forwarding information corresponding to the first prefix may be: before convergence duration reaches a duration threshold, using the SID corresponding to the target path as the forwarding information corresponding to the first prefix, where the convergence duration is duration from time at which the network device starts to perform route update to current time; and after the convergence duration reaches the duration threshold, using the outbound interface and the next hop corresponding to the target path as the forwarding information corresponding to the first prefix.

The duration threshold may be flexibly adjusted based on an application scenario. For example, the duration threshold is duration required for all the network devices in the topology structure to complete route update, namely, duration required for route convergence. In this way, before the convergence duration reaches the duration threshold, the SID corresponding to the target path is used as the forwarding information corresponding to the first prefix, so that the target path is indicated by the SID before route convergence, and the target path is indicated by the outbound interface and the next hop after route convergence. This can avoid a case in which information is forwarded in a closed-loop manner because completion time of route update of different network devices is different.

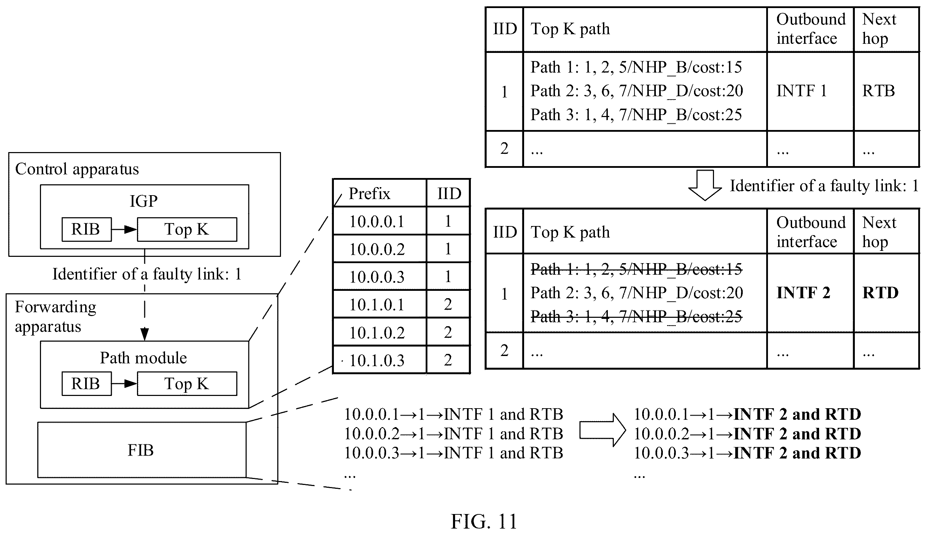

For example, as shown in FIG. 11, in the path 1, the path 2, and the path 3 corresponding to the IID: 1, the path 1 and the path 3 include the faulty link 1, and states of the path 1 and the path 3 are set to the unavailable state. A remaining path in the available state is the path 2, and the path 2 may be directly used as an updated target path. Then, the outbound interface and the next hop associated with the IID:1 are updated to the INTF 2 and the RTD based on the outbound interface and next hop corresponding to the path 2. Because the prefixes 10.0.0.1, 10.0.0.2, and 10.0.0.3 are associated with the IID:1, outbound interfaces and next hops associated with the prefixes 10.0.0.1, 10.0.0.2, and 10.0.0.3 are synchronously updated to the INTF 2 and the RTD. At this point, the network device completes route update, and the packet is forwarded based on a converged FIB.

In this embodiment of this application, because the prefix in the FIB is associated with the outbound interface and the next hop by using the IID, after the RIB is updated, the path forwarding module may directly deliver an outbound interface and a next hop associated with an updated IID to the FIB module, so that the FIB module does not need to change an association relationship between the prefix and the IID, and directly correspondingly updates an association relationship between the IID, and the outbound interface and the next hop. Compared with a manner of updating the outbound interface and the next hop associated with each prefix, this manner effectively reduces a quantity of times of table refreshing and improves convergence performance of route update.

In conclusion, according to the route update method provided in embodiments of this application, when the link fault occurs in the network, route recalculation does not need to be performed, and an updated outbound interface and next hop can be determined by only performing status update on the top K paths in the software table. This greatly reduces a calculation amount required for route update after the link fault. In addition, for a case in which the top K paths are deployed in the forwarding apparatus, because the control apparatus needs to deliver only the identifier of the faulty link to the forwarding apparatus when the fault occurs, time required by table flushing by the control apparatus to the forwarding apparatus is greatly reduced.

The following describes application of the route update method provided in embodiments of this application in the following two scenarios.

### Scenario 1: multi-source scenario

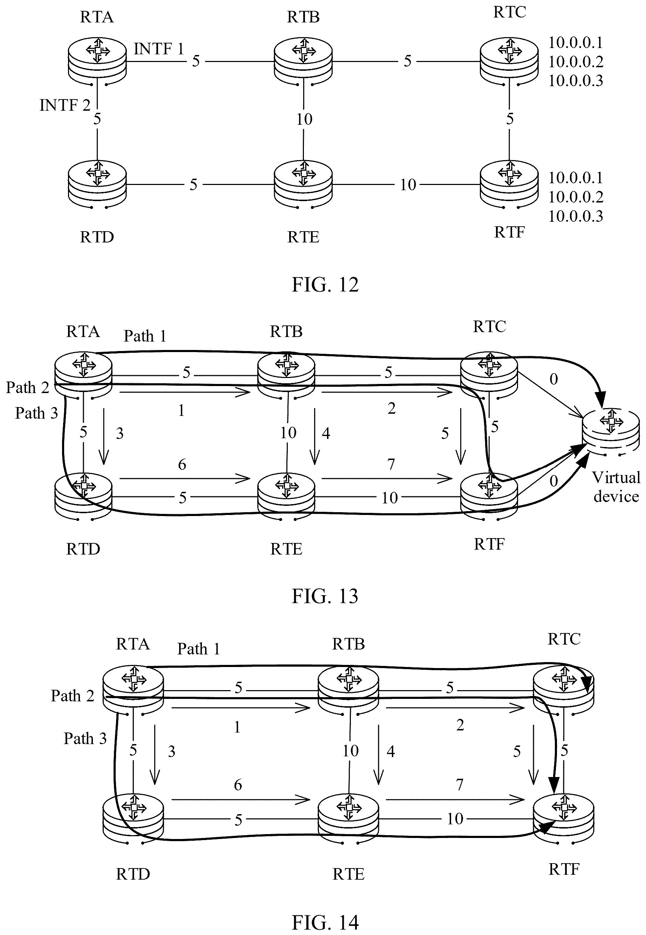

In Scenario 1, the multi-source scenario means that a same prefix may be advertised by a plurality of network devices. For example, as shown in FIG. 12, both the RTC and the RTF advertise the prefixes 10.0.0.1, 10.0.0.2, and 10.0.0.3. In this case, the prefixes 10.0.0.1, 10.0.0.2, and 10.0.0.3 correspond to two destination devices: the RTC and the RTF.

Refer to FIG. 13. In this case, when the RTA identifies the multi-source scenario, when calculating the Top K paths, the RTA may virtualize a virtual device shown in FIG. 13 in the topology structure of the network, and the virtual device is connected to the RTC and the RTF. Identifiers of links through which the virtual device is connected to the RTC and the RTF are set to 0. In this case, the top K paths associated with the prefixes 10.0.0.1, 10.0.0.2, and 10.0.0.3 need to be calculated, that is, top K paths from the RTA to the virtual device need to be calculated.

For example, as shown in FIG. 13, when K is 3, three paths: a path 1: 1, 2, and 0, a path 2: 1, 2, 5, and 0, and a path 3: 3, 6, 7, and 0 from the RTA to the virtual device may be obtained through calculation by using a K-SP algorithm. Further, refer to FIG. 14. The link 0 that is in the calculated path 1: 1, 2, and 0, path 2: 1, 2, 5, and 0, and path 3: 3, 6, 7, and 0 and that is related to the virtual device is deleted, so that final top 3 paths are: the path 1: 1 and 2, the path 2: 1, 2, and 5, and the path 3: 3, 6, and 7.

Therefore, when there are a plurality of destination devices corresponding to the first prefix, the process of calculating the path in step 501 may be: obtaining at least one path from the network device to a first virtual device, where the first virtual device is connected to the plurality of destination devices corresponding to the first prefix; and obtaining, based on the at least one path from the network device to the first virtual device, at least one path from the network device to the destination device corresponding to the first prefix. Because the first virtual device is connected to only the plurality of destination devices corresponding to the first prefix, and is not connected to any other device, the at least one path from the network device to the first virtual device definitely passes through the plurality of destination devices. Therefore, the at least one path from the network device to the first virtual device includes a path from the network device to any one of the plurality of destination devices. For example, a forwarding node that is of the first virtual device and that is in the at least one path from the network device to the first virtual device is deleted, to obtain the path from the network device to the destination device corresponding to the first prefix.

In Scenario 1, execution of other steps is the same except that path calculation based on the virtual device is different from step 501 to step 503. Details are not described herein again.

### Scenario 2: microloop avoidance scenario

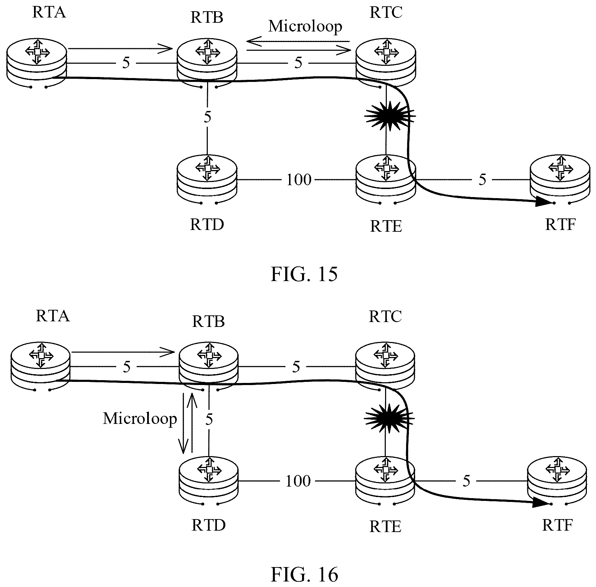

In Scenario 2, in a process in which the network devices in the network perform route update, the network devices may complete route update at different time. For example, if some of the network devices in the network enable the route update method provided in embodiments of this application, that is, some other network devices do not enable the route update method provided in embodiments of this application, time at which the network devices complete route update may be different. When the network devices complete route update at different time, a microloop scenario may exist in packet forwarding. The microloop avoidance scenario is a scenario in which a microloop is prevented. The following describes a local tangent microloop scenario with reference to FIG. 15, and describes a remote tangent microloop scenario with reference to FIG. 16.

Refer to FIG. 15. For example, a destination address of a first packet corresponds to the RTF, the packet is sent from the RTA, and a link between the RTC and the RTE is faulty. If the RTC completes route update and an updated next hop to the RTF is modified to the RTB, but the RTB does not complete route update, a next hop to the RTF is still the RTC. In this case, the RTB sends the first packet to the RTC. After the first packet arrives at the RTC, the RTC sends the first packet back to the RTB, and the first packet arriving at the RTB is sent back to the RTC. The RTB sends the first packet to the RTD after the RTB completes route update and a converged next hop to the RTF is modified to the RTD, to remove a local tangent microloop.

Refer to FIG. 16. For example, a destination address of a second packet also corresponds to the RTF, the packet is sent from the RTA, and the link between the RTC and the RTE is faulty. If the RTB completes route update and an updated next hop to the RTF is modified to the RTD, but the RTD does not complete route update, a next hop to the RTF is still the RTB (because a cost of the link between the RTD and the RTE is 100, a path determined by the RTD to the RTF according to a minimum-cost path determining principle is RTD-RTB-RTC-RTF). The RTB sends the second packet to the RTD. After the second packet arrives at the RTD, the RTD sends the second packet back to the RTB, and the second packet arriving at the RTB is sent back to the RTD. The RTD sends the second packet to the RTE after the RTD completes route update and the converged next hop to the RTF is modified to the RTE, to remove a remote tangent microloop.

For the foregoing possible microloop scenario, routing information of any path in embodiments of this application further includes a SID, and the SID corresponding to the second path indicates to forward the packet in the second path. When the forwarding information corresponding to the first prefix is obtained based on the routing information corresponding to the target path, before the convergence duration reaches the duration threshold, the SID corresponding to the target path may be first used as the forwarding information corresponding to the first prefix, to forward the packet in the target path indicated by the SID, so as to avoid a microloop. After the convergence duration reaches the duration threshold, if all the network devices in the network complete route update, route convergence is implemented. In this case, the outbound interface and the next hop corresponding to the target path may be used as the forwarding information corresponding to the first prefix.

In embodiments of this application, the duration threshold is time required for all the network devices in the network to complete route update, and may be obtained through statistics collection based on historical route update data. For example, the network device includes a microloop avoidance timer, and the duration threshold is set in advance on the microloop avoidance timer. The microloop avoidance timer starts timing when the network device performs route update, and when a specified duration threshold is reached, the microloop avoidance timer sends timeout information.

FIG. 8 is still used as an example. In embodiments of this application, when the top K paths are calculated, a segment list of a corresponding microloop avoidance path is further associated with each path. For example, a corresponding SID is associated with each path, and the SID corresponding to the second path is encapsulated into the packet, to indicate to forward the packet in the second path.

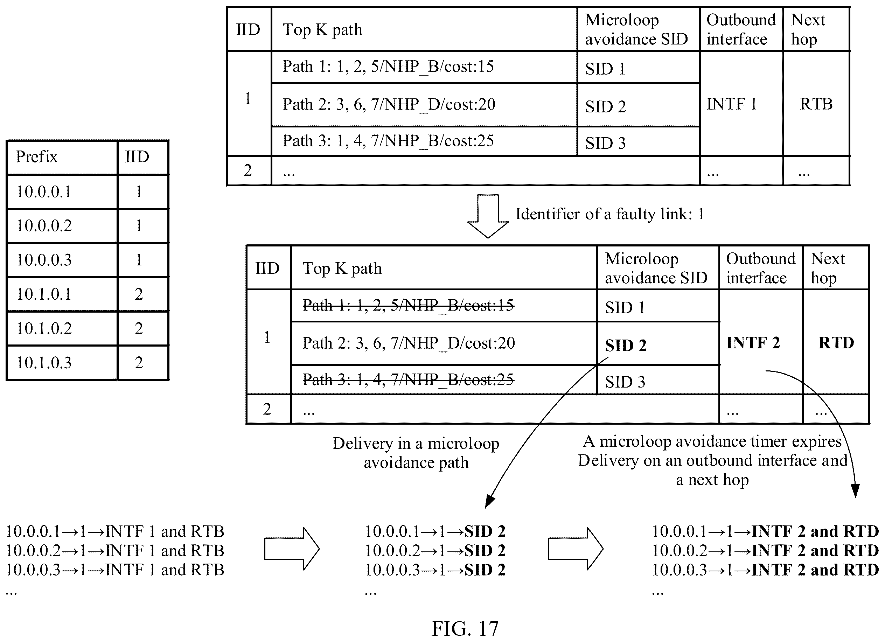

Similarly, the convergence process shown in FIG. 11 is still used as an example. After the RTA enables a microloop avoidance capability, as shown in FIG. 17, each path in the top K paths in the software table further corresponds to one SID. When the link 1 is faulty, it is determined, based on status update of the top K paths, that the target path after convergence is the path 2. A microloop avoidance SID associated with the path 2 is a SID 2. The SID 2 is updated to the FIB. During packet forwarding, SRv6 encapsulation is performed on the packet based on the SID 2, and the packet is forwarded based on a forwarding behavior indicated by the SID 2. In response to timeout of the microloop avoidance timer, each network device in the network completes route update, and may update the outbound interface and the next hop to the FIB, and then still perform forwarding based on the outbound interface and the next hop.

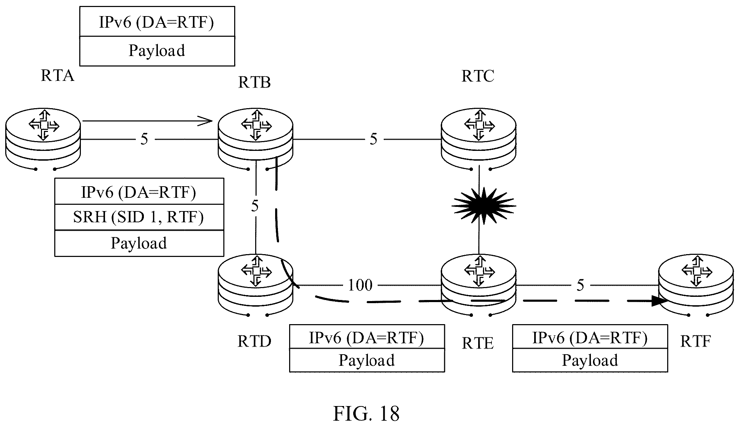

For example, refer to FIG. 18. For the RTB, if a remote link fault exists in the topology structure, the RTB completes route update prior to the RTD. After the first packet whose destination address (destination address, DA) is the RTF arrives at the RTB, the first packet further includes a payload (payload), and the RTB can extract the destination address from the first packet, where the destination address is an IPv6 address of the RTF. When the RTB enables microloop avoidance energy, and the RTB obtains, through matching based on a local FIB, that corresponding forwarding information is a SID 1, the RTB performs SRv6 path encapsulation on the first packet, that is, inserts an SRH into the first packet, to obtain the second packet, where the SRH carries an SRv6 path (SID 1, RTF) from the RTB to the RTF. The SID 1 is an End.X SID configured on the RTD. A forwarding behavior corresponding to the SID 1 is: forwarding the packet to a link between the RTD and the RTE.

Further, when receiving the second packet encapsulated with the SID 1, the RTD sends the second packet to the RTE based on the forwarding behavior corresponding to the SID 1, and the RTE decapsulates the second packet, that is, deletes the SRH in the second packet to obtain the original first packet, and forwards the first packet to the RTF. Therefore, after the second packet arrives at the RTD, the RTD does not send the second packet back to the RTB, and the microloop in FIG. 16 is removed.

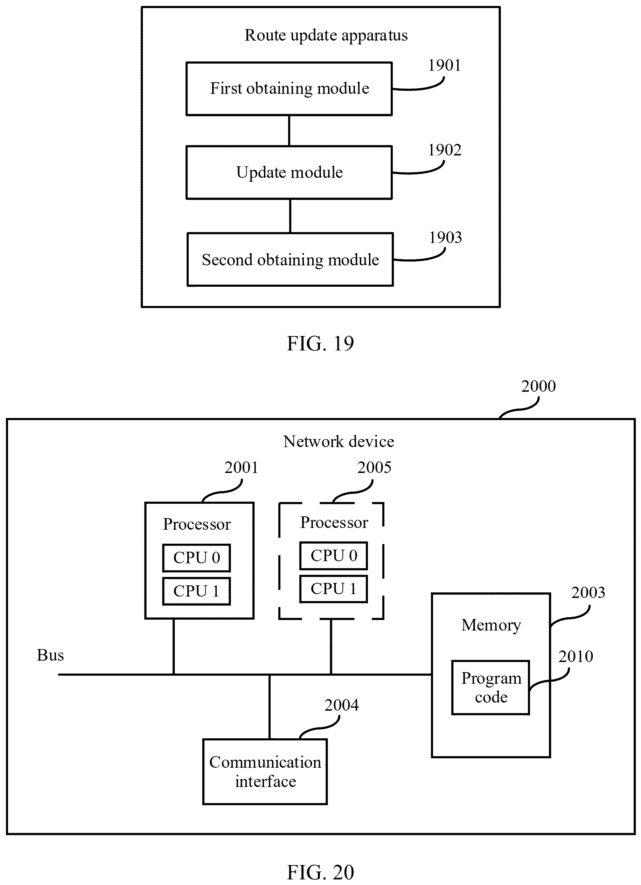

The foregoing describes the route update method in embodiments of this application. Corresponding to the foregoing method, an embodiment of this application further provides a route update apparatus. FIG. 19 is a diagram of a structure of a route update apparatus according to an embodiment of this application. The apparatus is used in any network device shown in FIG. 1. Based on a plurality of modules shown in FIG. 19, the route update apparatus shown in FIG. 19 can perform all or some operations performed by the network device. It should be understood that the apparatus may include more additional modules than the shown modules, or a part of the shown modules are omitted. This is not limited in embodiments of this application. As shown in FIG. 19, the apparatus includes:
a first obtaining module 1901, configured to obtain a faulty first link, where the network device includes a first entry, and the first entry includes a first prefix and a path corresponding to the first prefix;
an update module 1902, configured to update, based on the first link, the path corresponding to the first prefix; and
a second obtaining module 1903, configured to obtain, based on an updated path corresponding to the first prefix, forwarding information corresponding to the first prefix.

In a possible implementation, the update module 1902 is configured to update a status of a first path to an unavailable state, where the first path is a path including the first link in the path corresponding to the first prefix.

In a possible implementation, the updated path corresponding to the first prefix includes a plurality of paths in an available state. The second obtaining module 1903 is configured to: select a target path from the plurality of paths based on routing information respectively corresponding to the plurality of paths, where the routing information includes at least one of a cost, an outbound interface, and a next hop; and obtain, based on routing information corresponding to the target path, the forwarding information corresponding to the first prefix.

In a possible implementation, the routing information further includes a SID, and a SID corresponding to a second path in the plurality of paths indicates to forward a packet along the second path. The forwarding information corresponding to the first prefix includes a SID corresponding to the target path.

In a possible implementation, the network device includes a control apparatus and a forwarding apparatus, and the first entry is stored in the forwarding apparatus. The update module 1902 is configured to: send, by using the control apparatus, an identifier of the first link to the forwarding apparatus; and update, by using the forwarding apparatus based on the identifier of the first link, the path corresponding to the first prefix.

In a possible implementation, there are a plurality of first prefixes, the plurality of first prefixes are associated with corresponding paths and forwarding information by using a plurality of indirect indexes, and a quantity of the plurality of first prefixes is greater than a quantity of the plurality of indirect indexes. The update module 1902 is configured to update, based on the first link, paths respectively corresponding to the plurality of indirect indexes. The second obtaining module 1903, configured to obtain, based on paths respectively corresponding to a plurality of updated indirect indexes, forwarding information respectively corresponding to the plurality of indirect indexes; and obtain, based on a correspondence between the plurality of indirect indexes and the plurality of first prefixes, the forwarding information respectively corresponding to the plurality of first prefixes.

In a possible implementation, the apparatus further includes: a route calculation module, configured to perform route calculation based on a topology structure that is before a fault of the first link, to obtain at least one path from the network device to a destination device corresponding to the first prefix; and a generation module, configured to: use the at least one path as the path corresponding to the first prefix, and generate the first entry.

In a possible implementation, when there are a plurality of destination devices corresponding to the first prefix, the route calculation module is configured to: obtain at least one path from the network device to a first virtual device, where the first virtual device is connected to the plurality of destination devices corresponding to the first prefix; and obtain, based on the at least one path from the network device to the first virtual device, at least one path from the network device to the destination device corresponding to the first prefix.

When a link fault occurs in a network, the apparatus updates the forwarding information corresponding to the first prefix by using the path that is included in the first entry and that corresponds to the first prefix. In this process, route recalculation does not need to be performed. Therefore, a calculation amount required for route update after the link fault is reduced, and route update efficiency is improved.

It should be understood that, when the apparatus provided in FIG. 19 implements functions of the apparatus, division into the foregoing functional modules is merely an example for description. During actual application, the foregoing functions may be allocated to different functional modules for implementation based on a requirement. In other words, an inner structure of a device is divided into different functional modules, to implement all or some of the functions described above. In addition, the apparatuses provided in the foregoing embodiments and the method embodiments belong to a same concept. For specific implementation processes thereof, refer to the method embodiments. Details are not described herein again.

FIG. 20 is a diagram of a structure of a network device 2000 according to an example embodiment of this application. The network device 2000 shown in FIG. 20 is configured to perform operations related to the route update method shown in FIG. 5. The network device 2000 is, for example, a switch or a router, and the network device 2000 may be implemented by using a general bus architecture.

As shown in FIG. 20, the network device 2000 includes at least one processor 2001, a memory 2003, and at least one communication interface 2004.

The processor 2001 is, for example, a general-purpose central processing unit (central processing unit, CPU), a digital signal processor (digital signal processor, DSP), a network processor (network processor, NP), a graphics processing unit (Graphics Processing Unit, GPU), a neural-network processing unit (neural-network processing unit, NPU), a data processing unit (Data Processing Unit, DPU), a microprocessor, or one or more integrated circuits configured to implement the solutions of this application. For example, the processor 2001 includes an application-specific integrated circuit (application-specific integrated circuit, ASIC), a programmable logic device (programmable logic device, PLD), or another programmable logic device, a transistor logic device, a hardware component, or any combination thereof. The PLD is, for example, a complex programmable logic device (complex programmable logic device, CPLD), a field-programmable gate array (field-programmable gate array, FPGA), a generic array logic (generic array logic, GAL), or any combination thereof. The processor may implement or execute various logical blocks, modules, and circuits described with reference to the content disclosed in embodiments of the present invention. Alternatively, the processor may be a combination of processors implementing a computing function, for example, a combination including one or more microprocessors, or a combination of a DSP and a microprocessor.

Optionally, the network device 2000 further includes a bus. The bus is configured to transmit information between components of the network device 2000. The bus may be a peripheral component interconnect (peripheral component interconnect, PCI for short) bus, an extended industry standard architecture (extended industry standard architecture, EISA for short) bus, or the like. Buses may be classified into an address bus, a data bus, a control bus, and the like. For ease of representation, only one line is used in FIG. 20 for representation, but it does not mean that there is only one bus or one type of bus.

The memory 2003 is, for example, a read-only memory (read-only memory, ROM) or another type of static storage device that can store static information and instructions, for another example, a random access memory (random access memory, RAM) or another type of dynamic storage device that can store information and instructions, for another example, an electrically erasable programmable read-only memory (electrically erasable programmable read-only Memory, EEPROM), a compact disc read-only memory (compact disc read-only memory, CD-ROM) or other optical disk storage, an optical disk storage (including compact disc, laser disc, optical disc, digital versatile disc, Blu-ray disc, and the like), a magnetic disk storage medium or another magnetic storage device, or any other medium that can be used to carry or store desired program code in a form of an instruction or a data structure and that can be accessed by a computer, but is not limited thereto. For example, the memory 2003 exists independently, and is connected to the processor 2001 through the bus. Alternatively, the memory 2003 and the processor 2001 may be integrated together.

The communication interface 2004 is any apparatus like a transceiver, and is configured to communicate with another device or a communication network. The communication network may be an Ethernet, a radio access network (radio access network, RAN), a wireless local area network (wireless local area network, WLAN), or the like. The communication interface 2004 may include a wired communication interface, and may further include a wireless communication interface. Specifically, the communication interface 2004 may be an Ethernet (Ethernet) interface, a fast Ethernet (Fast Ethernet, FE) interface, a gigabit Ethernet (Gigabit Ethernet, GE) interface, an asynchronous transfer mode (Asynchronous Transfer Mode, ATM) interface, a wireless local area network (wireless local area network, WLAN) interface, a cellular network communication interface, or a combination thereof. The Ethernet interface may be an optical interface, an electrical interface, or a combination thereof. In embodiments of this application, the communication interface 2004 may be used by the network device 2000 to communicate with another device.

During specific implementation, in an embodiment, the processor 2001 may include one or more CPUs, such as a CPU 0 and a CPU 1 shown in FIG. 20. Each of the processors may be a single-core (single-core CPU) processor or a multi-core (multi-core CPU) processor. Herein, the processor may be one or more devices, circuits, and/or processing cores configured to process data (for example, computer program instructions).

During specific implementation, in an embodiment, the network device 2000 may include a plurality of processors, for example, a processor 2001 and a processor 2005 shown in FIG. 20. Each of the processors may be a single-core (single-core CPU) processor or a multi-core (multi-core CPU) processor. Herein, the processor may be one or more devices, circuits, and/or processing cores configured to process data (for example, computer program instructions).

During specific implementation, in an embodiment, the network device 2000 may further include an output device and an input device. The output device communicates with the processor 2001, and may display information in a plurality of manners. For example, the output device may be a liquid crystal display (liquid crystal display, LCD), a light emitting diode (light emitting diode, LED) display device, a cathode ray tube (cathode ray tube, CRT) display device, a projector (projector), or the like. The input device communicates with the processor 2001, and may receive an input from a user in a plurality of manners. For example, the input device may be a mouse, a keyboard, a touchscreen device, a sensing device, or the like.

In some embodiments, the memory 2003 is configured to store program code 2010 for executing the solutions of this application, and the processor 2001 may execute the program code 2010 stored in the memory 2003. In other words, the network device 2000 may implement the route update method in the method embodiment through the processor 2001 and the program code 2010 in the memory 2003. The program code 2010 may include one or more software modules. Optionally, the processor 2001 may also store program code or instructions for executing the solutions of this application.

In a specific embodiment, the network device 2000 in this embodiment of this application may correspond to the network device in the foregoing method embodiments, and the processor 2001 in the network device 2000 reads instructions in the memory 2003, so that the network device 2000 shown in FIG. 20 can perform all or some operations performed by the network device.

Specifically, the processor 2001 is configured to: obtain a faulty first link; update, based on the first link, a path corresponding to the first prefix; and obtain, based on an updated path corresponding to the first prefix, forwarding information corresponding to the first prefix. The network device includes a first entry, and the first entry includes a first prefix and a path corresponding to the first prefix.

For brevity, another optional implementation is not described herein again.

The network device 2000 may alternatively correspond to the route update apparatus shown in FIG. 19, and each functional module in the route update apparatus is implemented by using software of the network device 2000. In other words, the functional module included in the route update apparatus is generated after the processor 2001 of the network device 2000 reads the program code 2010 stored in the memory 2003.

The steps of the route update method shown in FIG. 5 are completed by an integrated logic circuit of hardware in the processor of the network device 2000 or instructions in a form of software. The steps of the method disclosed with reference to embodiments of this application may be directly performed by a hardware processor, or may be performed by using a combination of hardware in the processor and a software module. A software module may be located in a mature storage medium in the art, for example, a random access memory, a flash memory, a read-only memory, a programmable read-only memory, an electrically erasable programmable memory, or a register. The storage medium is located in the memory. The processor reads information in the memory, and completes the steps of the foregoing methods in combination with hardware of the processor. To avoid repetition, details are not described herein again.

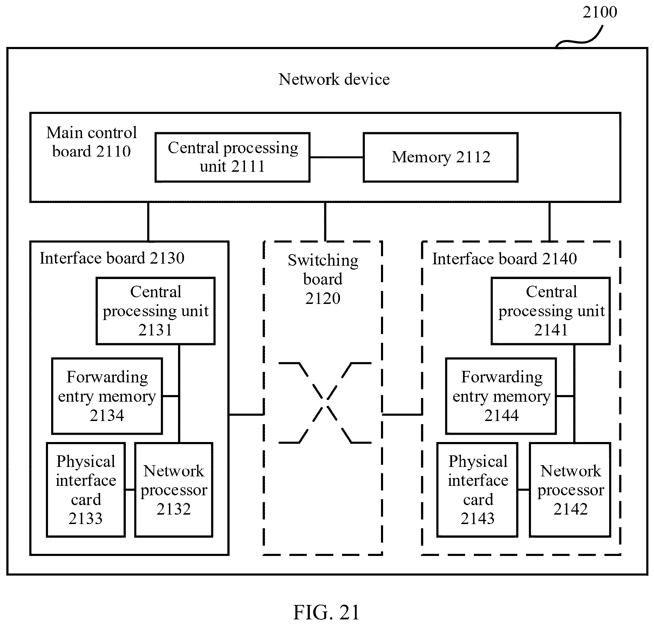

FIG. 21 is a diagram of a structure of a network device 2100 according to another example embodiment of this application. The network device 2100 shown in FIG. 21 is configured to perform all or some of operations in the route update method shown in FIG. 5 above. The network device 2100 is, for example, a switch or a router. The network device 2100 may be implemented by a general bus architecture.

As shown in FIG. 21, the network device 2100 includes a main control board 2110 and an interface board 2130.

The main control board is also referred to as a main processing unit (main processing unit, MPU) or a route processor card (route processor card). The main control board 2110 is configured to: control and manage each component in the network device 2100, including functions of route calculation, device management, device maintenance, and protocol processing. The main control board 2110 includes a central processing unit 2111 and a memory 2112.

The interface board 2130 is also referred to as a line processing unit (line processing unit, LPU), a line card (line card), or a service board. The interface board 2130 is configured to provide various service interfaces and implement data packet forwarding. The service interfaces include but are not limited to an Ethernet interface, a POS (Packet over SONET/SDH) interface, and the like. The Ethernet interface is, for example, a flexible Ethernet service interface (Flexible Ethernet Client, FlexE Client). The interface board 2130 includes a central processing unit 2131, a network processor 2132, a forwarding entry memory 2134, and a physical interface card (physical interface card, PIC) 2133.

The central processing unit 2131 on the interface board 2130 is configured to: control and manage the interface board 2130 and communicate with the central processing unit 2111 on the main control board 2110.

The network processor 2132 is configured to implement packet forwarding processing. A form of the network processor 2132 may be a forwarding chip. The forwarding chip may be a network processor (network processor, NP). In some embodiments, the forwarding chip may be implemented by using an application-specific integrated circuit (application-specific integrated circuit, ASIC) or a field programmable gate array (field programmable gate array, FPGA). Specifically, the network processor 2132 is configured to forward a received packet based on a forwarding table stored in the forwarding entry memory 2134. If a destination address of the packet is an address of the network device 2100, the network processor 2132 sends the packet to a CPU (for example, the central processing unit 2131) for processing. If a destination address of the packet is not an address of the network device 2100, the network processor 2132 finds, from the forwarding table based on the destination address, a next hop and an outbound interface that correspond to the destination address, and forwards the packet to the outbound interface corresponding to the destination address. Processing an uplink packet may include: processing an inbound interface of the packet and searching a forwarding table. Processing a downlink packet may include: searching a forwarding table, and the like. In some embodiments, the central processing unit may also perform a function of a forwarding chip, for example, implement software forwarding based on a general-purpose CPU, so that no forwarding chip is required in the interface board.

The physical interface card 2133 is configured to implement a physical layer interconnection function, so that original traffic enters the interface board 2130, and a processed packet is sent out from the physical interface card 2133. The physical interface card 2133 is also referred to as a subcard, may be installed on the interface board 2130, and is responsible for converting an optical/electrical signal into a packet, performing validity check on the packet, and then forwarding the packet to the network processor 2132 for processing. In some embodiments, the central processing unit 2131 may also perform a function of the network processor 2132, for example, implement software forwarding based on a general-purpose CPU, so that the network processor 2132 is not required in the physical interface card 2133.

Optionally, the network device 2100 includes a plurality of interface boards. For example, the network device 2100 further includes an interface board 2140. The interface board 2140 includes a central processing unit 2141, a network processor 2142, a forwarding entry memory 2144, and a physical interface card 2143. Functions and implementations of components in the interface board 2140 are the same as or similar to those of the interface board 2130, and details are not described herein again.

Optionally, the network device 2100 further includes a switching board 2120. The switching board 2120 may also be referred to as a switch fabric unit (switch fabric unit, SFU). When the network device 2100 has the plurality of interface boards, the switching board 2120 is configured to perform data exchange between the interface boards. For example, the interface board 2130 and the interface board 2140 may communicate with each other by using the switching board 2120.

The main control board 2110 is coupled to the interface board. For example, the main control board 2110, the interface board 2130, the interface board 2140, and the switching board 2120 are connected to a system backboard by using a system bus for interworking. In a possible implementation, an inter-process communication (inter-process communication, IPC) protocol channel is established between the main control board 2110 and the interface board 2130, and between the main control board 2110 and the interface board 2140. The main control board 2110 communicates with the interface board 2130 and the interface board 2140 through the IPC channels.

Logically, the network device 2100 includes a control plane and a forwarding plane. The control plane includes the main control board 2110 and the central processing unit 2111. The forwarding plane includes components such as the forwarding entry memory 2134, the physical interface card 2133, and the network processor 2132 that perform forwarding. The control plane performs functions such as a router, generating a forwarding table, processing signaling and protocol packets, and configuring and maintaining a status of the network device. The control plane delivers the generated forwarding table to the forwarding plane. On the forwarding plane, the network processor 2132 searches, based on the forwarding table delivered by the control plane, a table for forwarding the packet received by the physical interface card 2133. The forwarding table delivered by the control plane may be stored in the forwarding entry memory 2134. In some embodiments, the control plane and the forwarding plane may be completely separated, and are not on a same network device.

It should be noted that there may be one or more main control boards, and when there are a plurality of main control boards, a primary main control board and a secondary main control board may be included. There may be one or more interface boards. A network device with a stronger data processing capability provides a larger number of interface boards. There may also be one or more physical interface cards on the interface board. There may be no switching board or one or more switching boards. When there are a plurality of switching boards, load balancing and redundancy backup may be implemented together. In a centralized forwarding architecture, the network device may not need a switching board, and the interface board provides a function of processing service data of an entire system. In a distributed forwarding architecture, the network device may have at least one switching board, and data exchange between a plurality of interface boards is implemented by using the switching board, to provide a large-capacity data exchange and processing capability. Therefore, a data access and processing capability of a network device of a distributed architecture is greater than that of a network device of a centralized architecture. Optionally, the form of the network device may alternatively be a single board. That is, there is no switch fabric board, and functions of the interface board and the main control board are integrated into the board. In this case, the central processing unit on the interface board and the central processing unit on the main control board may be combined into one central processing unit on the board. The one central processing unit on the board performs functions of the two central processing units existing after the two central processing units are combined. The network device in this form has low data exchange and processing capabilities (for example, a network device such as a low-end switch or router). A specific architecture that is to be used depends on a specific networking deployment scenario. This is not limited herein.

In a specific embodiment, the network device 2100 corresponds to the route update apparatus shown in FIG. 19. In some embodiments, the first obtaining module 1901, the update module 1902, and the second obtaining module 1903 in the route update apparatus shown in FIG. 19 are equivalent to the central processing unit 2111 or the network processor 2132 in the network device 2100.

An embodiment of this application further provides a communication apparatus. The apparatus includes a transceiver, a memory, and a processor. The transceiver, the memory, and the processor communicate with each other through an internal connection path. The memory is configured to store instructions. The processor is configured to execute the instructions stored in the memory, to control the transceiver to receive a signal and control the transceiver to send a signal. In addition, when the processor executes the instructions stored in the memory, the processor is enabled to perform the method that needs to be performed by the network device.

It should be understood that the processor may be a CPU, or may be another general-purpose processor, a digital signal processor (digital signal processing, DSP), an application-specific integrated circuit (application-specific integrated circuit, ASIC), a field programmable gate array (field-programmable gate array, FPGA) or another programmable logic device, a discrete gate or a transistor logic device, a discrete hardware component, or the like. The general-purpose processor may be a microprocessor or any conventional processor or the like. It should be noted that the processor may be a processor that supports an advanced reduced instruction set computing machines (advanced RISC machines, ARM) architecture.

Further, in an optional embodiment, the memory may include a read-only memory and a random access memory, and provide instructions and data for the processor. The memory may further include a non-volatile random access memory. For example, the memory may further store information of a device type.

The memory may be a volatile memory or a non-volatile memory, or may include both a volatile memory and a non-volatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example, and not limitation, many forms of RAMs are available, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

An embodiment of this application further provides a computer-readable storage medium. The storage medium stores at least one instruction, and the instruction is loaded and executed by a processor, to enable a computer to implement the foregoing route update method.

An embodiment of this application further provides a computer program (product). When the computer program is executed by a computer, a processor or the computer may be enabled to perform corresponding steps and/or procedures in the foregoing method embodiments.

An embodiment of this application further provides a chip, including a processor, configured to: invoke, from a memory, instructions stored in the memory and run the instructions, to enable a communication device on which the chip is installed to perform any one of the foregoing route update methods.

An embodiment of this application further provides another chip, including an input interface, an output interface, a processor, and a memory. The input interface, the output interface, the processor, and the memory are connected through an internal connection path. The processor is configured to execute code in the memory. When the code is executed, the processor is configured to perform any one of the foregoing route update methods.

All or some of the foregoing embodiments may be implemented by using software, hardware, firmware, or any combination thereof. When software is used to implement embodiments, all or some of embodiments may be implemented in a form of a computer program product. The computer program product includes one or more computer instructions. When the computer program instructions are loaded and executed on a computer, the procedure or functions according to this application are completely or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk)), or the like.

A person of ordinary skill in the art may be aware that, with reference to the method steps and modules described in embodiments disclosed in this specification, the method steps and modules can be implemented by using software, hardware, firmware, or any combination thereof. To clearly describe interchangeability between the hardware and the software, the steps and compositions of embodiments have been generally described in terms of functions in the foregoing descriptions. Whether the functions are performed by hardware or software depends on particular applications and design constraint conditions of the technical solutions. A person of ordinary skill in the art may use different methods to implement the described functions for each particular application, but it should not be considered that the implementation goes beyond the scope of this application.

A person of ordinary skill in the art may understand that all or some of the steps of embodiments may be implemented by hardware or a program instructing related hardware. The program may be stored in a computer-readable storage medium. The storage medium may include a read-only memory, a magnetic disk, or an optical disc.

When software is used to implement embodiments, all or some of embodiments may be implemented in a form of a computer program product. The computer program product includes one or more computer program instructions. In an example, the method according to embodiments of this application may be described in the context of machine-executable instructions. For example, the machine-executable instructions are included in a program module that is in a component for execution on a real or virtual processor of a target. Generally, the program module includes a routine, a program, a library, an object, a class, a component, a data structure, and the like, and executes a specific task or implements a specific abstract data structure. In various embodiments, the functions of the program modules may be combined or split between the described program modules. The machine-executable instructions for the program module may be executed locally or within a distributed device. In the distributed device, the program module may be located in both a local storage medium and a remote storage medium.

Computer program code for implementing the methods in embodiments of this application may be written in one or more programming languages. The computer program code may be provided for a processor of a general-purpose computer, a dedicated computer, or another programmable data processing apparatus, so that when the program code is executed by the computer or the another programmable data processing apparatus, functions/operations specified in the flowcharts and/or block diagrams are implemented. The program code may be executed entirely on a computer, executed partially on a computer, executed as a standalone software package, executed partially on a computer and partially on a remote computer, or executed entirely on a remote computer or a server.

In the context of embodiments of this application, computer program code or related data may be carried in any appropriate carrier, so that the device, the apparatus, or the processor can perform various types of processing and operations described above. Examples of the carrier include a signal, a computer-readable medium, and the like.

Examples of the signal may include an electrical signal, an optical signal, a radio signal, a voice signal, or other forms of propagated signals, such as a carrier wave and an infrared signal.

A machine-readable medium may be any tangible medium that includes or stores programs for or with respect to an instruction execution system, apparatus, or device. The machine-readable medium may be a machine-readable signal medium or a machine-readable storage medium. The machine-readable medium may include but is not limited to an electronic, magnetic, optical, electromagnetic, infrared, or semiconductor system, apparatus, or device, or any appropriate combination thereof. A more detailed example of the machine-readable storage medium includes an electrical connection with one or more wires, a portable computer disk, a hard disk, a random access memory (RAM), a read-only memory (ROM), an erasable programmable read-only memory (EPROM or flash memory), an optical storage device, a magnetic storage device, or any appropriate combination thereof.

It may be clearly understood by a person skilled in the art that, for the purpose of convenient and brief description, for a detailed working process of the foregoing described system, device, and module, refer to a corresponding process in the foregoing method embodiments. Details are not described herein again.

In the several embodiments provided in this application, it should be understood that the disclosed system, device, and method may be implemented in other manners. For example, the described device embodiment is merely an example. For example, division into modules is merely division into logical functions and there may be other division modes during actual application. For example, a plurality of modules or components may be combined or may be integrated to another system, or some characteristics may be ignored or not executed. In addition, the displayed or discussed mutual couplings or direct couplings or communication connections may be indirect couplings or communication connections implemented through some interfaces, devices, or modules, or may be electrical, mechanical, or other forms of connections.

The modules described as separate parts may or may not be physically separate, and parts displayed as modules may or may not be physical modules, to be specific, may be located at one position, or may be distributed on a plurality of network modules. Some or all of the modules may be selected based on actual requirements to implement the objectives of the solutions of embodiments of this application.

In addition, functional modules in embodiments of this application may be integrated into one processing module, or each of the modules may exist alone physically, or two or more modules may be integrated into one module. The foregoing integrated module may be implemented in a form of hardware, or may be implemented in a form of a software functional module.

If the integrated module is implemented in the form of the software functional module and sold or used as an independent product, the integrated module may be stored in a computer-readable storage medium. Based on such an understanding, the technical solutions of this application essentially, or the part contributing to the conventional technology, or all or some of the technical solutions may be implemented in the form of a software product. The computer software product is stored in a storage medium and includes several instructions for indicating a computer device (which may be a personal computer, a server, a network device, or the like) to perform all or some of the steps of the method described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The terms such as "first" and "second" in this application are used to distinguish between same or similar items with basically same roles and functions. It should be understood that there is no logical or timing dependency between "first", "second", and "n^{th}", and neither a quantity nor an execution sequence is limited. It should also be understood that although the following descriptions use terms such as "first" and "second" to describe various elements, these elements should not be limited by the terms. These terms are simply used to distinguish one element from another. For example, a first image may be referred to as a second image, and similarly, a second image may be referred to as a first image without departing from the scope of the various examples. Both the first image and the second image may be images, and in some cases, may be separate and different images.

It should be further understood that, in embodiments of this application, sequence numbers of the processes do not mean execution sequences. The execution sequences of the processes should be determined based on functions and internal logic of the processes, and should not be construed as any limitation on implementation processes of embodiments of this application.

In this application, the term "at least one" means one or more, and the term "a plurality of" in this application means two or more. For example, a plurality of second packets means two or more second packets. The terms "system" and "network" are often used interchangeably herein.

It should be understood that the terms used in the descriptions of the various examples herein are merely intended to describe specific examples and are not intended to impose a limitation. The terms "one" ("a" and "an") and "the" of singular forms used in the descriptions of the various examples and the appended claims are also intended to include plural forms, unless otherwise specified in the context clearly.

It should be further understood that a term "and/or" used in this specification indicates and includes any or all possible combinations of one or more of the associated listed items. The term "and/or" describes an association relationship for describing associated objects and represents that three relationships may exist. For example, A and/or B may represent the following three cases: Only A exists, both A and B exist, and only B exists. In addition, the character "/" in this application generally indicates an "or" relationship between the associated objects.

It should further be understood that the term "include" (also referred to as "includes", "including", "comprises", and/or "comprising") used in this specification specifies presence of the stated features, integers, steps, operations, elements, and/or components, with presence or addition of one or more other features, integers, steps, operations, elements, components, and/or components thereof not excluded.

It should be further understood that the terms "if" and "if" may be interpreted to mean "when" ("when" or "upon") or "in response to determining" or "in response to detecting". Similarly, according to the context, the phrase "if it is determined that" or "if (a stated condition or event) is detected" may be interpreted as a meaning of "when it is determined that" or "in response to determining" or "when (a stated condition or event) is detected" or "in response to detecting (a stated condition or event)".

It should be understood that determining B based on A does not mean that B is determined based only on A, and B may alternatively be determined based on A and/or other information.

It should further be understood that "one embodiment", "an embodiment", and "a possible implementation" mentioned throughout the specification mean that a specific feature, structure, or characteristic related to the embodiment or an implementation is included in at least one embodiment of this application. Therefore, "in one embodiment" or "in an embodiment" or "a possible implementation" appearing throughout the specification may not necessarily refer to a same embodiment. In addition, these particular features, structures, or characteristics may be combined in one or more embodiments by using any appropriate manner.

The foregoing descriptions are merely optional embodiments of this application, but are not intended to limit this application. Any modification, equivalent replacement, or improvement made without departing from the principle of this application should fall within the protection scope of this application.

## Claims

1. A route update method, wherein the method comprises:
obtaining, by a network device, a faulty first link, wherein the network device comprises a first entry, and the first entry comprises a first prefix and a path corresponding to the first prefix;
updating, by the network device based on the first link, the path corresponding to the first prefix; and
obtaining, by the network device based on an updated path corresponding to the first prefix, forwarding information corresponding to the first prefix.

2. The method according to claim 1, wherein the updating, by the network device based on the first link, the path corresponding to the first prefix comprises:
updating a status of a first path to an unavailable state, wherein the first path is a path comprising the first link in the path corresponding to the first prefix.

3. The method according to claim 1 or 2, wherein the updated path corresponding to the first prefix comprises a plurality of paths in an available state; and the obtaining, by the network device based on an updated path corresponding to the first prefix, forwarding information corresponding to the first prefix comprises:
selecting a target path from the plurality of paths based on routing information respectively corresponding to the plurality of paths, wherein the routing information comprises at least one of a cost, an outbound interface, and a next hop; and
obtaining, based on routing information corresponding to the target path, the forwarding information corresponding to the first prefix.

4. The method according to claim 3, wherein the routing information further comprises a segment identifier SID, a SID corresponding to a second path in the plurality of paths indicates to forward a packet along the second path, and the forwarding information corresponding to the first prefix comprises a SID corresponding to the target path.

5. The method according to any one of claims 1 to 4, wherein the network device comprises a control apparatus and a forwarding apparatus, and the first entry is stored in the forwarding apparatus; and
the updating, by the network device based on the first link, the path corresponding to the first prefix comprises:
sending, by the control apparatus, an identifier of the first link to the forwarding apparatus; and
updating, by the forwarding apparatus based on the identifier of the first link, the path corresponding to the first prefix.

6. The method according to any one of claims 1 to 5, wherein there are a plurality of first prefixes, the plurality of first prefixes are associated with corresponding paths and forwarding information by using a plurality of indirect indexes, and a quantity of the plurality of first prefixes is greater than a quantity of the plurality of indirect indexes;
the updating, by the network device based on the first link, the path corresponding to the first prefix comprises:
updating, by the network device based on the first link, paths respectively corresponding to the plurality of indirect indexes; and
the obtaining, by the network device based on an updated path corresponding to the first prefix, forwarding information corresponding to the first prefix comprises:
obtaining, by the network device based on updated paths respectively corresponding to the plurality of indirect indexes, forwarding information respectively corresponding to the plurality of indirect indexes, and obtaining, based on a correspondence between the plurality of indirect indexes and the plurality of first prefixes, forwarding information respectively corresponding to the plurality of first prefixes.

7. The method according to any one of claims 1 to 6, wherein before the obtaining, by a network device, a faulty first link, the method further comprises:
performing, by the network device, route calculation based on a topology structure that is before a fault of the first link, and obtaining at least one path from the network device to a destination device corresponding to the first prefix; and
using, by the network device, the at least one path as the path corresponding to the first prefix, and generating the first entry.

8. The method according to claim 7, wherein when there are a plurality of destination devices corresponding to the first prefix, the obtaining at least one path from the network device to a destination device corresponding to the first prefix comprises:
obtaining at least one path from the network device to a first virtual device, wherein the first virtual device is connected to the plurality of destination devices corresponding to the first prefix; and
obtaining, based on the at least one path from the network device to the first virtual device, the at least one path from the network device to the destination device corresponding to the first prefix.

9. A route update apparatus, wherein the apparatus comprises:
a first obtaining module, configured to obtain a faulty first link, wherein the network device comprises a first entry, and the first entry comprises a first prefix and a path corresponding to the first prefix;
an update module, configured to update, based on the first link, the path corresponding to the first prefix; and
a second obtaining module, configured to obtain, based on an updated path corresponding to the first prefix, forwarding information corresponding to the first prefix.

10. The apparatus according to claim 9, wherein the update module is configured to update a status of a first path to an unavailable state, wherein the first path is a path comprising the first link in the path corresponding to the first prefix.

11. The apparatus according to claim 9 or 10, wherein the updated path corresponding to the first prefix comprises a plurality of paths in an available state; and the second obtaining module is configured to: select a target path from the plurality of paths based on routing information respectively corresponding to the plurality of paths, wherein the routing information comprises at least one of a cost, an outbound interface, and a next hop; and obtain, based on routing information corresponding to the target path, the forwarding information corresponding to the first prefix.

12. The apparatus according to claim 11, wherein the routing information further comprises a segment identifier SID, a SID corresponding to a second path in the plurality of paths indicates to forward a packet along the second path, and the forwarding information corresponding to the first prefix comprises a SID corresponding to the target path.

13. The apparatus according to any one of claims 9 to 12, wherein the network device comprises a control apparatus and a forwarding apparatus, and the first entry is stored in the forwarding apparatus; and the update module is configured to: send, by using the control apparatus, an identifier of the first link to the forwarding apparatus; and update, by using the forwarding apparatus based on the identifier of the first link, the path corresponding to the first prefix.

14. The apparatus according to any one of claims 9 to 13, wherein there are a plurality of first prefixes, the plurality of first prefixes are associated with corresponding paths and forwarding information by using a plurality of indirect indexes, and a quantity of the plurality of first prefixes is greater than a quantity of the plurality of indirect indexes;
the update module is configured to update, based on the first link, paths respectively corresponding to the plurality of indirect indexes; and
the second obtaining module is configured to: obtain, based on updated paths respectively corresponding to the plurality of indirect indexes, forwarding information respectively corresponding to the plurality of indirect indexes; and obtain, based on a correspondence between the plurality of indirect indexes and the plurality of first prefixes, forwarding information respectively corresponding to the plurality of first prefixes.

15. The apparatus according to any one of claims 9 to 14, wherein the apparatus further comprises: a route calculation module, configured to: perform route calculation based on a topology structure that is before a fault of the first link, and obtain at least one path from the network device to a destination device corresponding to the first prefix; and
a generation module, configured to: use the at least one path as the path corresponding to the first prefix, and generate the first entry.

16. The apparatus according to claim 15, wherein when there are a plurality of destination devices corresponding to the first prefix, the route calculation module is configured to: obtain at least one path from the network device to a first virtual device, wherein the first virtual device is connected to the plurality of destination devices corresponding to the first prefix; and
obtain, based on the at least one path from the network device to the first virtual device, the at least one path from the network device to the destination device corresponding to the first prefix.

17. A network device, wherein the network device comprises a processor, the processor is coupled to a memory, the memory stores at least one program instruction or code, and the at least one program instruction or the code is loaded and executed by the processor, to enable the network device to implement the route update method according to any one of claims 1 to 8.

18. A computer-readable storage medium, wherein the computer storage medium stores at least one instruction, and the at least one instruction is loaded and executed by a processor, to enable a computer to implement the route update method according to any one of claims 1 to 8.

19. A computer program product, wherein the computer program product comprises computer program code, and the computer program code is loaded and executed by a computer, to enable the computer to implement the route update method according to any one of claims 1 to 8.
